# EUROPÄISCHE PATENTSCHRIFT

(11) **EP 1 234 852 B1**
(45) Veröffentlichungstag und Bekanntmachung des Hinweises auf die Patenterteilung: **28.06.2006**
(21) Anmeldenummer: 02002828.8
(22) Anmeldetag: 08.02.2002
(51) Int. Cl.: C08L 21/00, B60C 1/00

(54) **Kautschukmischung für Laufstreifen von Reifen**
Rubber composition for tyre tread
Composition de caoutchouc pour bande de roulement d'un pneu

(30) Priorität: 23.02.2001 DE 10108981
(43) Veröffentlichungstag der Anmeldung: 28.08.2002
(73) Patentinhaber: Continental Aktiengesellschaft, 30165 Hannover (DE)
(72) Erfinder: Recker, Carla, dr., 30167 Hannover (DE)

(56) Entgegenhaltungen:
- EP-A- 0 728 807
- EP-A- 0 921 150
- DE-A- 19 622 169
- US-A- 3 113 605

## Beschreibung

Die Erfindung betrifft eine mit Schwefel vulkanisierbare Kautschukmischung für den Laufstreifen eines Reifens, insbesondere eines Winterreifens. Die Erfindung betrifft ferner einen Reifen, dessen Laufstreifen zumindest zum Teil aus der mit Schwefel vulkanisierten Kautschukmischung besteht.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. Für Winterreifen sollten die Mischungen für den Laufstreifen besonders positiven Einfluss auf die Wintereigenschaften, wie beispielsweise das Traktionsverhalten und das Bremsverhalten auf eisigem und schneeigem Untergrund oder den Nassgriff, haben. Um dies zu erreichen, ist schon die Einmischung von unterschiedlichsten Materialien in Kautschukmischungen für Laufstreifen vorgeschlagen worden.

Aus ökologischen und toxikologischen Gesichtspunkten versucht man bei den Materialien zur Einmischung, auf in der Natur vorkommende Materialien pflanzlichen oder tierischen Ursprungs zurückzugreifen.

So ist es z. B. aus der EP 677 548 A1 bekannt, in Laufstreifenmischungen für Winterreifen als Tieftemperaturweichmacher vom Estertyp pflanzliche Öle, wie Rapsöl oder Rizinusöl, einzusetzen.

Weiterhin ist es aus der DE 40 05 493 A1 bekannt, einer Kautschukmischung, die für Laufstreifen von Winterreifen besonders geeignet sein soll, Lederpulver oder Gelatinepulver, die Proteine beinhalten, beizumengen. Gelatine ist eine wasserlösliche Substanz, die schwierig in eine Kautschukmischung einzuarbeiten ist und die als nicht kautschukfreundlich einzustufen ist. Leder besitzt einen gewissen Wassergehalt, ist ein hydrophiles Material und wasserquellbar und somit ebenfalls wenig kautschukfreundlich. Sowohl bei Leder als auch bei Gelatine hat sich herausgestellt, dass sich solche Materialien relativ leicht aus der Oberfläche von Reifenlaufstreifen herauslösen, was die Wirksamkeit dieser Materialien beschränkt und auch die Abriebsbeständigkeit des Laufstreifens verschlechtert.

Zusätze für Kautschukmischungen für Laufstreifen von Winterreifen, die sich gut in die Mischungen einarbeiten lassen und die beim Reifen nicht zu einer starken Verschlechterung des Abriebverhaltens führen, werden z. B. in der DE 196 10 375 A1 und der DE 196 22 169 A1 vorgeschlagen. Die DE 196 10 375 A1 beschreibt, Kautschukmischungen für Laufstreifen von Winterreifen, die ein Fasergemisch von Cellulosefasern und Keratinfasern aufweisen, wobei Keratinfasern proteinhaltige Fasern sind. Aus der DE 196 22 169 A1 ist es bekannt, in Kautschukmischungen für Laufstreifen von Winterreifen Proteine aus Stärkepflanzen, wie z. B. Weizen oder Kartoffeln, einzumischen. In der US-A-3 113 605 werden ebenfalls Kautschukmischungen für Laufstreifen von Winterreifen offenbart, die Proteine aus z. B. Sojabohnen enthalten.

Der vorliegenden Erfindung liegt nun die Aufgabe zugrunde, die Wintereigenschaften von Laufstreifenmischungen, insbesondere was Schnee- und Eisgriff betrifft, unter Beimengung natürlicher und somit umweltverträglicher und toxikologisch unbedenklicher, Materialien noch weiter zu verbessern.

Gelöst wird diese Aufgabe erfindungsgemäß dadurch, dass die Kautschukmischung Proteine aus Rapssaaten oder Lupinensaaten enthält.

Überraschenderweise wurde festgestellt, dass die Beimengung von Proteinen aus den Ölsaaten (Samen aus Ölpflanzen) von Raps und Lupine im Vergleich zur Beimengung von Proteinen aus Stärkepflanzen, wie z. B. Weizen, nochmals eine weitere Verbesserung der bereits guten Wintereigenschaften bewirkt. Traktions- und Bremsverhalten auf eisigem und schneeingem Untergrund konnten deutlich positiv beeinflusst werden. Gleichzeitig bleiben der Rollwiderstand und der Nassgriff des Reifens bei Verwendung dieser Mischungen für den Laufstreifen auf nahezu unverändertem Niveau.
Die Mischungen weisen trotz einer größeren Härte, die bei herkömmlichen Mischungen üblicherweise mit einer Verschlechterung des Eis- und Schneegriffs einhergeht, einen verbesserten Eis- und Schneegriff auf.

Der Anteil an Reinproteinen, die aus Raps- oder Lupinensaaten stammen, beträgt in der Kautschukmischung vorteilhafterweise 0,7 bis 15 Vol.-% (Volumen des Proteins bezogen auf das Volumen der Mischung), insbesondere 1,6 bis 6 Vol.-%. Die Dichten der Proteine aus Ölsaaten liegen dabei im Bereich von 1,5 g/mL. Bei Proteinanteilen ab 0,7 Vol.-% kann man deutlich positve Effekte in den Wintereigenschaften erkennen. Bei Proteinanteilen von mehr als 15 Vol.-% ergeben sich für die aus den Mischungen hergestellten Reifen stark erhöhte Abriebwerte.

Die Proteine können in Reinform oder im Gemisch mit anderen Verbindungen, d. h. als proteinhaltige Substanzen, in die Kautschukmischung eingebracht werden. Bevorzugt ist, wenn der Kautschukmischung die Proteine oder proteinhaltigen Substanzen in Form von Isolaten oder Konzentraten beigemengt werden. Die Herstellung von Proteinisolaten und die Herstellung von Proteinkonzentraten aus pflanzlichen Rohstoffen sind etablierte Verfahren, die eine Bereitstellung der Proteine bzw. proteinhaltigen Substanzen in ausreichenden Mengen gewährleisten. Zur Gewinnung von Proteinisolaten wird das Protein zunächst unter neutralen bis schwach alkalischen Prozessbedingungen mit Wasser extrahiert, von den unlöslichen Bestandteilen abgetrennt, und anschließend bei sauren Milieubedingungen wieder ausgefällt. Isolate sind durch einen Proteingehalt von bis zu 90 g/100 g Trockensubstanz gekennzeichnet. Konzentrate erhält man nach einer alkoholischen oder wässrigen Extraktion von Nicht-Proteinbestandteilen. Konzentrate sind durch einen Proteingehalt von etwa 70 g/100 g Trockensubstanz gekennzeichnet. Die Proteinisolate und -konzentrate, die aus Ölsaaten gewonnen werden, enthalten als weitere Inhaltsstoffe oft bis zu 15 Gew.-% pflanzliche Öle.

Die Proteine oder proteinhaltigen Substanzen können in Form von Fasern oder Lösungen, z. B. wässrigen Lösungen, oder sonstigen dem Fachmann bekannten Darreichungsformen in die Kautschukmischung eingebracht werden. Besonders bevorzugt ist allerdings, wenn das Protein oder die proteinhaltige Substanz als Pulver der Kautschukmischung beigemengt wird. Die Pulver lassen sich schnell, ohne zusätzliche Lösungsmittel und ohne dass die Kautschukmischung weiteren zusätzlichen Verfahrensschritten unterworfen werden muss, gleichmäßig in der Kautschukmischung verteilen. Die Proteine oder proteinhaltigen Substanzen können auch vor der Zugabe zur Mischung mit anderen Zuschlagstoffen vermengt werden.

Die Proteine oder proteinhaltigen Substanzen können vor der Beimengung zur Kautschukmischung unterschiedlichen chemischen Reaktionen unterworfen werden, um dadurch die guten Eigenschaften, die mit den Proteinen in der Kautschukmischung bei den Reifen bewirkt werden, weiter zu verbessern. Die Proteinmoleküle können z. B. in der Weise modifiziert werden, dass ihre Hydrophobie zunimmt und dadurch eine bessere Wechselwirkung mit der Kautschukmatrix möglich wird. Eine andere Möglichkeit besteht darin, die Proteinmoleklüle in der Art zu modifizieren, dass eine chemische Anbindung an die umgebenden Kautschukmoleküle erfolgen kann. Dies kann z. B. durch die Einführung ungesättigter Gruppen in die Proteine geschehen.

Aus Pflanzen isolierte oder konzentrierte Proteine sind hochmolekular (Molekulargewicht > 10000 Dalton). Gemäß einer Weiterbildung der Erfindung kann das Molekulargewicht der Proteine vor der Beimengung oder vor einer eventuellen weiteren chemischen Reaktion durch Hydrolyse reduziert werden. Die Hydrolyse kann dabei auf chemischem Wege mittels Säuren oder Basen bei erhöhten Temperaturen oder auf enzymatischem Wege mit industriell verfügbaren Enzymen realisiert werden. Die Vorteile dieser Weiterbildung sind darin zu sehen, dass sich die kürzeren Moleküle besser in der Kautschukmischung verteilen und sich dadurch ein besseres Abriebverhalten ergibt.

Die schwefelvernetzbare Kautschukmischung kann unterschiedlichste dem Fachmann bekannte Kautschuke enthalten, von denen jedoch zumindest einer aus der Gruppe der Dienkautschuke ausgewählt sein muss, da dieser Kautschuktyp mit Schwefel vernetzbar ist. Zu den Dienkautschuken zählen alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke ausgewählt ist bzw. sind aus der Gruppe, bestehend aus Naturkautschuk (NR), synthetischem Polyisopren (IR), Polybutadien (BR) und Styrol-Butadien-Copolymer (SBR). Diese Dienelastomere lassen sich gut zu der erfindungsgemäßen Kautschukmischung verarbeiten und zeigen gute Reifeneigenschaften.

Die Kautschukmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 %. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 %.

Enthält die Kautschukmischung als Dienkautschuk Polybutadien (BR), kann es sich dabei sowohl um cis-1,4- als auch um Vinyl-Polybutadien (40-90 % Vinyl-Anteil) handeln. Bevorzugt ist die Verwendung von cis-1,4-Polybutadien mit einem cis-1,4-Anteil größer 90 %, welches z. B. durch Lösungspolymerisation in Anwesenheit von Katalysatoren vom Typ der seltenen Erden hergestellt werden kann.

Bei dem Styrol-Butadien-Copolymer kann es sich um lösungspolymerisiertes Styrol-Butadien-Copolymer (S-SBR) mit einem Styrolgehalt bezogen auf das Polymer von ca. 10 bis 45 % und einem Vinylgehalt (Gehalt an 1,2-gebundenem Butadien bezogen auf das gesamte Polymer) von 10 bis 70 % handeln, welches zum Beispiel unter Verwendung von Lithiumalkylen in organischem Lösungsmittel hergestellt werden kann. Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 % und es können die aus dem Stand der Technik bekannten Typen, die durch Copolymerisation von Styrol und 1,3-Butadien in wässriger Emulsion erhalten wurden, verwendet werden.

Zusätzlich zu den genannten Dienkautschuken kann die Mischung aber auch noch andere Kautschuktypen, wie z. B. Styrol-Isopren-Butadien-Terpolymer, Butylkautschuk, Halobutylkautschuk, Acrylnitril-Butadien-Kautschuk, hydrierten Acrylnitril-Butadien-Kautschuk, epoxidierten Naturkautschuk, hydroxylierten Naturkautschuk oder Ethylen-Propylen-Dien-Kautschuk (EPDM), enthalten.

Die Eigenschaften der aus der erfindungsgemäßen Kautschukmischung hergestellten Reifen können zusätzlich positiv beeinflusst und gezielt eingestellt werden, indem die Kautschukmischung bezogen auf 100 Gewichtsteile Protein 3 bis 20 Gewichtsteile zumindest einer Substanz zur Anbindung des Proteins an den Kautschuk enthält. Besonders die Abriebeigenschaften können auf diese Weise verbessert werden, da sich ein festes Netzwerk zwischen Kautschukmolekülen und Protein ausbildet, aus welchem schwer etwas herauszubrechen ist.

Zur Anbindung der Proteine an den Kautschuk kann man zum einen bifunktionelle Organosilane, wie der Fachmann sie zur Anbindung von Kieselsäure an Kautschuk kennt und die daher kommerziell verfügbar sind, verwenden. Derartige bifunktionelle Organosilane sind solche, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit dem Polymer eingehen kann. Bei der letztgenannten Gruppe kann es sich z. B. um die folgenden chemischen Gruppen handeln: -SCN, -SH, -NH₂ oder -Sₓ- (mit x = 2-8). Beispiele für solche bifunktionellen Organosilane sind 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden. TESPT kann dabei beispielsweise auch als Gemisch mit Industrieruß (Handelsname X 50-S der Firma Degussa-Hüls AG) zugesetzt werden.
Zum anderen kann man zur Anbindung des Proteins an den Kautschuk auch flüssige, ungesättigte Polymere mit Funktionalitäten, die eine Anbindung an das Protein ermöglichen, verwenden, z. B. Polybutadien modifiziert mit Anhydridgruppen. Funktionalitäten wie eine Anhydridgruppe oder eine Isocyanatgruppe reagieren während der Verarbeitung und Vulkanisation mit dem Protein, während die Doppelbindungen des ungesättigten Polymers an der Schwefelvernetzungsreaktion teilnehmen.

Durch den Zusatz von 1 bis 15 phr Rapsöl zur Kautschukmischung kann man Einfluss auf die Härte der Vulkanisate nehmen und den Eisgriff daraus hergestellter Reifen vorteilhaft beeinflussen. Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die Kautschukmischung kann außerdem übliche Füllstoffe, wie beispielsweise Ruß, Kieselsäure, Aluminiumoxide, Alumosilicate, Kreide, Stärke, Magnesiumoxid, Titandioxid oder Kautschukgele, in üblichen Mengen enthalten.

Werden Füllstoffe verwendet, bei denen zur besseren Anbindung an den Kautschuk spezielle Zuschlagstoffe benutzt werden können und stimmen diese Zuschlagstoffe mit denen zur Anbindung der Proteine an den Kautschuk überein, wie es z. B. bei der Verwendung von bifunktionellen Organosilanen für die Anbindung von Kieselsäure und Protein an Kautschuk der Fall ist, so ist die Menge an dem betreffenden Zuschlagstoff in der Gesamtmischung entsprechend zu erhöhen. Zur Anbindung des Proteins und der Kieselsäure an den Kautschuk sind dann für das vorstehende Beispiel mit bifunktionellem Organosilan pro 100 Gewichtsteile Protein 3 bis 20 Gewichtsteile Organosilan und pro 100 Gewichtsteile Kieselsäure 3 bis 8 Teile Organosilan zu zudosieren. Die Gesamtmenge an Substanzen zur Anbindung an den Kautschuk setzt sich in solchen Fällen, wo ein weiterer Füllstoff über dieselbe Substanz wie das Protein angebunden wird, additiv aus den Anteilen für die Anbindung von Protein an Kautschuk und den Anteilen für die Anbindung des anderen Fülstoffs an Kautschuk zusammen.

Des Weiteren kann die erfindungsgemäße Kautschukmischung übliche Zusatzstoffe in üblichen Gewichtsteilen enthalten. Zu diesen Zusatzstoffen zählen z. B. Weichmacher, Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Verarbeitungshilfsmittel wie z. B. Zinkoxid und Fettsäuren wie Stearinsäure, Wachse und Mastikationshilfsmittel wie z. B. 2,2'-Dibenzamidodiphenyldisulfid (DBD).

Die Vulkanisation wird in Anwesenheit von Schwefel oder Schwefelspendern durchgeführt, wobei einige Schwefelspender zugleich als Vulkanisationsbeschleuniger wirken können. Als Schwefelspender können dabei beispielsweise Thiuramderivate wie Tetramethylthiuramdisulfid und Dipentamethylenthiuramtetrasulfid, Morpholinderivate wie Dimorpholyldisulfid, Dimorpholyltetrasulfid und 2-Morpholinodithiobenzothiazol sowie Caprolactamdisulfid verwendet werden. Schwefel oder Schwefelspender werden im letzten Mischungschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung vulkanisationsbeeinflussende Substanzen, wie Vulkanisationsbeschleuniger, Vulkanisationsverzögerer und Vulkanisationsaktivatoren, in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid, Guanidinbeschleuniger wie z. B. Diphenylguanidin, Thiurambeschleuniger wie z. B. Tetrabenzylthiuramdisulfid, Dithiocarbamatbeschleuniger wie z. B. Zinkdibenzyldithiocarbamat, Aminbeschleuniger wie z. B. Cyclohexylethylamin, Thioharnstoffe wie z. B. Ethylenthioharnstoff, Xanthogenatbeschleuniger, Disulfide. Die Beschleuniger können auch in Kombination miteinander eingesetzt werden, wobei sich synergistische Effekte ergeben können.

Die Herstellung der erfindungsgemäßen Kautschukmischung erfolgt auf herkömmliche Art und Weise in einer oder mehreren Mischstufen. Anschließend wird diese weiterverarbeitet z. B. durch einen Extrusionsvorgang und in die entsprechende Form eines Laufstreifenrohlings gebracht. Ein so erzeugter Laufstreifenmischungsrohling wird bei der Herstellung des Reifenrohlings, insbesondere Fahrzeugluftreifenrohlings, wie bekannt aufgelegt. Der Laufstreifen kann aber auch auf einen Reifenrohling, der bereits alle Reifenteile bis auf den Laufstreifen enthält, in Form eines Kautschukmischungsstreifens aufgewickelt werden. Nach der Vulkanisation des Fahrzeugreifens weist der Reifen Vorteile in denWintereigenschaften auf. Es ist bei den Reifen unerheblich, ob der gesamte Laufstreifen aus einer einzigen Mischung hergestellt worden ist oder z. B. einen Cap- und Base-Aufbau aufweist, denn wichtig ist, dass zumindest die mit der Fahrbahn in Berührung kommende Fläche aus der erfindungsgemäßen Kautschukmischung hergestellt worden ist.

Die Erfindung soll nun anhand von einigen Vergleichs- und Ausführungsbeispielen, die in der Tabelle 1 zusammengefasst sind, näher erläutert werden, ohne jedoch auf diese Beispiele beschränkt zu sein.

Bei sämtlichen in der Tabelle 1 enthaltenen Mischungsbeispielen sind die angebenen Mengenangaben Gewichtsteile, die auf 100 Gewichtsteile Gesamtkautschuk bezogen sind (phr). Zusätzlich ist für die proteinhaltigen Mischungen der Volumenanteil an Protein angegeben, wobei die Dichte der Proteine 1,5 g/mL beträgt. Alle Mischungen ließen sich mit dem Fachmann bekannten Verfahren einfach und unproblematisch mischen. Als Kautschuk kam in allen Mischungsbeispielen S-SBR zum Einsatz. Alterungsschutzmittel, Zinkoxid, Stearinsäure, Beschleuniger und Schwefel sind als weitere Zuschlagstoffe in sämtlichen in der Tabelle aufgeführten Mischungen in identischen Mengen enthalten. Die Proteine, das Organosilan und das Rapsöl wurden variiert. Mit V bezeichnete Mischungen dienen als Vergleichsmischungen, sie enthalten keine Proteine oder nur Proteine aus Weizen. Mit E sind erfindungsgemäße Mischungen bezeichnet, die Proteine aus Ölsaaten aufweisen.

Die beiden Mischungen wurden bei 160 °C vulkanisiert und der Vulkanisationsprozess über ein rotorloses Vulkameter (MDR = Moving Disc Rheometer) gemäß DIN 53 529 verfolgt. Daraus wurden die Umsatzzeiten bis zum Erreichen der relativen Vernetzungsgrade von 10 und 95 % (t₁₀, t₉₅) ermittelt.

Außerdem wurde die Mooney-Viskosität der Mischungen gemäß DIN 53 523 mit einem Scherscheiben-Viskosimeter bei 100 °C ermittelt.

Durch 10-minütige Vulkanisation bei 160 °C unter Druck wurden aus den verschiedenen Mischungen Prüfkörper hergestellt. Mit diesen Prüfkörpern wurden für die Kautschukindustrie typische Materialeigenschaften bestimmt. Für die Tests an Prüfkörpern wurden folgende Testverfahren angewandt:
- Zugfestigkeit bei Raumtemperatur gemäß DIN 53 504
- Reißdehnung bei Raumtemperatur gemäß DIN 53 504
- Spannungswerte bei 100, 200 und 300 % Dehnung bei Raumtemperatur gemäß DIN 53 504
- Shore-A-Härte bei Raumtemperatur und 70 °C gemäß DIN 53 505
- Rückprallelastizität bei Raumtemperatur und 70 °C gemäß DIN 53 512
- Verlustfaktor tan δ bei 0 und 60 °C gemäß DIN 53 513 aus Messung mit konstanter Verformungsamplitude vn 0,2 % bei 10 % Verformung in Kompression mit 10 Hz dynamischer Verformungsfrequenz
- Abrieb gemäß DIN 53 516
- Pendelversuch auf Eis mit dem British Portable Skid Resistance Tester (BPST) bei 5 °C, wobei bei einer Wertung (rating) der Pendelausschlag der Ausgangsmischung V 1 in Skalenteilen (SKT) gleich 100 gesetzt wurde und Werte, die größer als 100 sind einer Verbesserung der Eisgriffs gleichzusetzen sind.

Außerdem wurden Reifen aus einigen Mischungen hergestellt und mit diesen Reifen vergleichende Versuche bezüglich der Schneetraktion durchgeführt. Die Schneetraktion (Griff auf Schnee) von Reifen mit einem Laufstreifen aus einer herkömmlichen Mischung wurde gleich 100 gesetzt, Werte größer als 100 bedeuten eine Verbesserung der entsprechenden Eigenschaft (Wertung, rating).

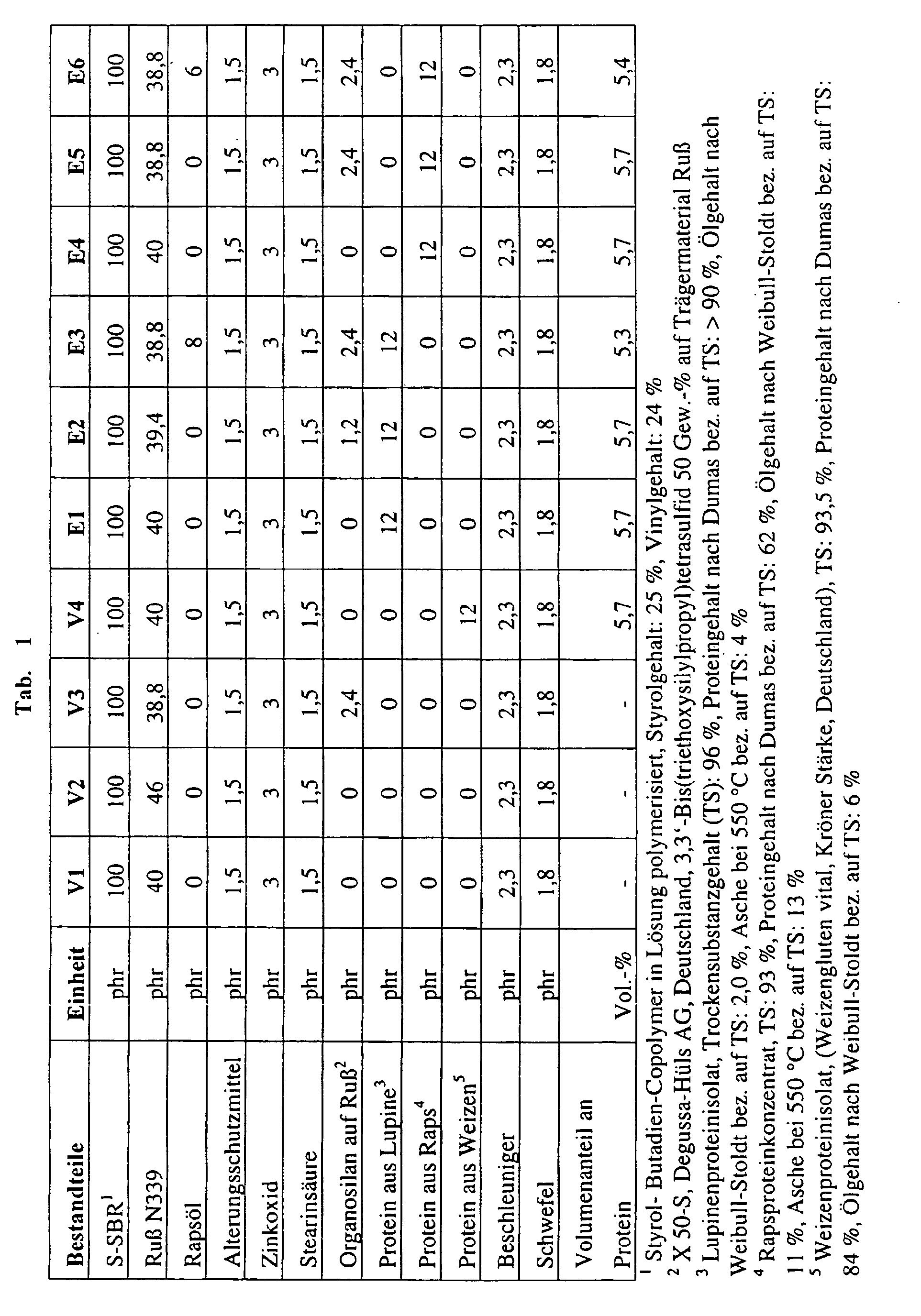

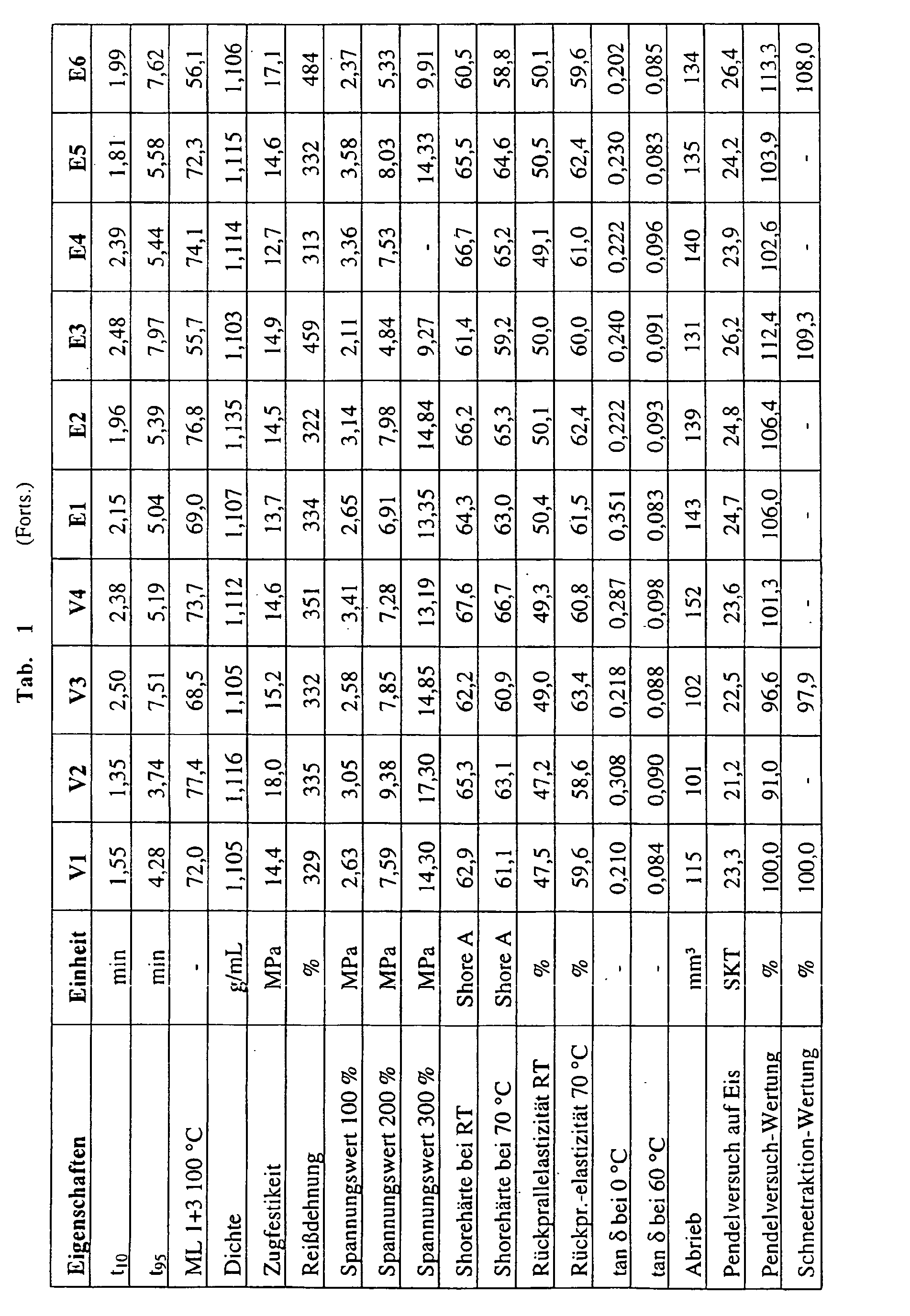

Wie aus der Tabelle 1 ersichtlich wird, verbessert die Einmischung von Proteinen in Kautschukmischungen den Eisgriff. Dabei ist zu beachten, dass überraschenderweise die Mischungen mit den Proteinen aus den Ölsaaten Lupine und Raps (E1 bis E6) noch einen deutlich besseren Eisgriff aufweisen als die entsprechende Mischung mit Weizenproteinen (V4). Auch die Traktion auf Schnee ist bei Reifen mit einem Laufstreifen aus den erfindungsgemäßen Mischung als deutlich besser als bei Reifen aus der herkömmlichen Mischung V1. Gleichzeitig verbleiben der Nassgriff, der mit dem tan δ bei 0 °C korrelierbar ist (je größer der tan δ bei 0 °C, desto besser der Nassgriff), und der Rollwiderstand, der mit dem tan δ bei 60 °C korrelierbar ist (je kleiner der tan δ bei 60 °C, desto niedriger ist der Rollwiderstand), auf gutem Niveau.

Bei herkömmlichen Mischungen ohne Proteine beobachtet man üblicherweise, dass eine Härteerhöhung, z. B. durch Erhöhung des Rußanteils in der Mischung, mit einer Verschlechterung des Eisgriffs verbunden ist. Diesen Effekt spiegelt das Vergleichsbeispiel V2 wider, bei dem der Rußanteil gegenüber der Ausgangsmischung V1 um 6 phr erhöht wurde. Die Shore-Härte nimmt zu und der Eisgriff wird deutlich schlechter. Bei den Mischungen, die Proteine enthalten, beobachtet man dagegen den Effekt, dass die Härte zunimmt und trotzdem der Eisgriff verbessert wird.

Die Beispiele V4, E2 und E5 belegen, dass durch die Verwendung einer Substanz zur Anbindung des Proteins an den Kautschuk, nämlich in diesem Fall durch die Verwendung eines bifunktionellen Organosilans, der Eisgriff noch weiter verbessert werden kann, wobei gleichzeitig der Abrieb in vorteilhafter Weise verringert wird.

Besonders gute Wintereigenschaften in Bezug auf Eis- und Schneegriff und gleichzeitig ein gutes Abriebverhalten kann man erzielen, wenn man, wie in den Mischungen E3 und E6, Proteine, Rapsöl und bifunktionelles Organosilan gleichzeitig einmischt.

## Patentansprüche

1. Mit Schwefel vulkanisierbare Kautschukmischung für den Laufstreifen eines Reifens, insbesondere eines Winterreifens,
**dadurch gekennzeichnet,**
**dass** sie Proteine aus Rapssaaten oder Lupinensaaten enthält.

2. Kautschukmischung nach Anspruch 1, **dadurch gekennzeichnet, dass** der Anteil an Reinproteinen, die aus Rapssaaten oder Lupinensaaten stammen, in der Kautschukmischung vorteilhafterweise 0,7 bis 15 Vol-%, insbesondere 1,6 bis 6 Vol.-%, beträgt.

3. Kautschukmischung nach Anspruch 1 oder 2, **dadurch gekennzeichnet, dass** die Proteine oder die proteinhaltigen Substanzen in Form von Isolaten oder Konzentraten beigemengt werden.

4. Kautschukmischung nach zumindest einem der vorhergehenden Ansprüche, **dadurch gekennzeichnet, dass** die Proteine oder die proteinhaltigen Substanzen als Pulver beigemengt werden.

5. Kautschukmischung nach zumindest einem der vorhergehenden Ansprüche, **dadurch gekennzeichnet, dass** das Molekulargewicht der Proteine vor der Beimengung durch Hydrolyse reduziert ist.

6. Kautschukmischung nach zumindest einem der vorhergehenden Ansprüche, **dadurch gekennzeichnet, dass** sie bezogen auf 100 Gewichtsteile Protein 3 bis 20 Gewichtsteile zumindest einer Substanz zur Anbindung des Proteins an den Kautschuk enthält.

7. Kautschukmischung nach Anspruch 6, **dadurch gekennzeichnet, dass** die Substanz zur Anbindung des Proteins an den Kautschuk ein bifunktionelles Organosilan oder ein flüssiges, ungesättigtes Polymer mit Funktionalitäten, die eine Anbindung an das Protein ermöglichen, ist.

8. Kautschukmischung nach zumindest einem der vorhergehenden Ansprüche, **dadurch gekennzeichnet, dass** sie 1 bis 15 phr Rapsöl enthält.

9. Reifen, dessen Laufstreifen zumindest zum Teil aus einer mit Schwefel vulkanisierten Kautschukmischung nach zumindest einem der Ansprüche 1 bis 8 besteht.

## Claims

1. Rubber blend vulcanizable with sulphur and intended for the tread of a tyre, in particular of a winter tyre, **characterized in that** it contains proteins from rape seeds and lupin seeds.

2. Rubber blend according to Claim 1, **characterized in that** the proportion of pure proteins in the rubber blend which originate from rape seeds or lupin seeds is advantageously from 0.7 to 15% by volume, in particular from 1.6 to 6% by volume.

3. Rubber blend according to Claim 1 or 2, **characterized in that** the proteins or the protein-containing substances are admixed in the form of isolates or concentrates.

4. Rubber blend according to at least one of the preceding claims, **characterized in that** the proteins or the protein-like substances are admixed as powder.

5. Rubber blend according to at least one of the preceding claims, **characterized in that** the molecular weight of the proteins is reduced by hydrolysis prior to the admixing.

6. Rubber blend according to at least one of the preceding claims, **characterized in that** it contains, based on 100 parts by weight of protein, from 3 to 20 parts by weight of at least one substance for binding the protein to the rubber.

7. Rubber blend according to Claim 6, **characterized in that** the substance for binding the protein to the rubber is a bifunctional organosilane or a liquid, unsaturated polymer having functionalities which permit binding to the protein.

8. Rubber blend according to at least one of the preceding claims, **characterized in that** it contains from 1 to 15 phr of rapeseed oil.

9. Tyre, the tread of which at least partly comprises a rubber blend vulcanized with sulphur according to at least one of Claims 1 to 8.

## Revendications

1. Composition de caoutchouc vulcanisable au soufre pour la bande de roulement d'un bandage de roue, en particulier d'un bandage de roue pour conditions hivernales,
**caractérisée en ce que** cette composition contient des protéines qui proviennent de graines de colza ou de graines de lupin.

2. Composition de caoutchouc selon la revendication 1, **caractérisée en ce que** la proportion de protéines pures provenant des graines de colza ou des graines de lupin dans la composition de caoutchouc est avantageusement comprise entre 0,7 et 15 % en volume et en particulier entre 1,6 et 6 % en volume.

3. Composition de caoutchouc selon la revendication 1 ou 2, **caractérisée en ce que** les protéines ou les substances qui contiennent des protéines sont ajoutées sous la forme de substances isolées ou de concentrés.

4. Composition de caoutchouc selon au moins l'une des revendications précédentes, **caractérisée en ce que** les protéines ou les substances qui contiennent des protéines sont ajoutées sous forme de poudre.

5. Composition de caoutchouc selon au moins l'une des revendications précédentes, **caractérisée en ce qu'**avant l'addition, le poids moléculaire des protéines est diminué par hydrolyse.

6. Composition de caoutchouc selon au moins l'une des revendications précédentes, **caractérisée en ce que** pour 100 parties en poids de protéines, elle contient de 3 à 20 parties en poids d'au moins une substance qui lie les protéines au caoutchouc.

7. Composition de caoutchouc selon la revendication 6, **caractérisée en ce que** la substance qui lie les protéines au caoutchouc est un organosilane bifonctionnel ou un polymère insaturé liquide qui présente des fonctionnalités qui permettent la liaison à la protéine.

8. Composition de caoutchouc selon au moins l'une des revendications précédentes, **caractérisée en ce qu'**elle contient de 1 à 15 phr d'huile de colza.

9. Bandage pour roue dont la bande de roulement est constituée au moins en partie d'une composition de caoutchouc vulcanisée au soufre selon au moins l'une des revendications 1 à 8.
